# EUROPÄISCHE PATENTSCHRIFT

(11) **EP 3 499 106 B1**
(45) Veröffentlichungstag und Bekanntmachung des Hinweises auf die Patenterteilung: **08.01.2025**
(21) Anmeldenummer: 18000962.3
(22) Anmeldetag: 12.12.2018
(51) Int. Cl.: F16L 25/01

(54) **STECKVERBINDER**
CONNECTOR
CONNECTEUR À FICHE

(30) Priorität: 14.12.2017 DE 202017006427 U
(43) Veröffentlichungstag der Anmeldung: 19.06.2019
(73) Patentinhaber: Voss Automotive GmbH, 51688 Wipperfürth (DE)
(72) Erfinder: Etscheid, Tobias, 51789 Lindlar (DE); Serdaris, Jannis, 51643 Gummersbach (DE); Vlachos, Joe, 51515 Kürten (DE)
(74) Vertreter: Rebbereh, Cornelia

(56) Entgegenhaltungen:
- EP-A2- 1 172 595
- EP-A2- 1 310 721
- WO-A1-2006/018384
- DE-A1- 102010 060 208
- GB-A- 1 335 823
- GB-A- 914 971
- US-A- 3 140 342
- US-A- 3 930 674
- US-A1- 2015 176 732

## Beschreibung

Die Erfindung betrifft einen Steckverbinder, umfassend zumindest einen zumindest teilweise elektrisch leitfähigen Steckerteil, zumindest einen zumindest teilweise elektrisch leitfähigen Kupplungsteil sowie zumindest ein Steckerteil und Kupplungsteil aneinander fixierendes Halteelement.

Derartige Steckverbinder sind im Stand der Technik bekannt. Diese dienen zum Verbinden von insbesondere Fluidleitungen untereinander und mit einem Aggregat. Die Steckverbinder umfassen zumindest einen Steckerteil und zumindest einen Kupplungsteil, die ineinander gesteckt werden. Um die Verbindung von Steckerteil und Kupplungsteil aneinander zu fixieren, ist es ebenfalls bekannt, zumindest ein Halteelement vorzusehen. Dieses ist insbesondere C-förmig, wie beispielsweise aus der WO 2006/018384 A1 bekannt.

Gerade bei Verwenden einer mit endseitig angeordneten Steckverbindern versehenen Fluidleitung zum Durchleiten von Kraftstoff ist es ferner bekannt, zum Vermeiden einer elektrostatischen Aufladung bzw. zum Ableiten von dieser insbesondere die Fluidleitung selbst, jedoch auch die endseitig an dieser angeordneten Steckverbinder elektrisch leitend auszuführen, also Materialien für deren Herstellung zu verwenden, die elektrisch leitend sind. Eine solche elektrostatische Aufladung entsteht beim Strömen des Kraftstoffs durch die Fluidleitung durch Reibung entlang der Leitungswandung. Im Bereich von Kraftstofftanks besteht aufgrund einer solchen elektrostatischen Aufladung allerdings Explosionsgefahr, so dass ein Ableiten von dieser vor einem Kraftstofftank wünschenswert ist. Beispielsweise wird in der DE 10 2012 112 563 A1 offenbart, die Wandung der Fluidleitung bzw. eines Leitungsstücks mit zumindest zwei Schichten zu versehen, wobei die innere Schicht leitfähig ist und die äußere eine Isolierschicht. Die innere leitfähige Schicht wird mit Leitungsverbinderteilen elektrisch verbunden und die Leitungsverbinderteile jeweils durch eine elektrisch isolierende Abdeckeinrichtung geschützt. Die beim Strömen des Mediums durch die entsprechende Fluidleitung entstehenden elektrostatischen Aufladungen werden über die elektrisch leitfähige Innenschicht der Leitungswandung abtransportiert.

Als problematisch erweisen sich allerdings Übergangsstellen zwischen insbesondere einem Steckverbinder und einem Aggregat, wie beispielsweise einem Tank, wie einem Kraftstofftank. Da im Inneren eines Steckverbinders, der die Fluidleitung mit dem Aggregat bzw. Tank verbindet, wechselnde Abstände zwischen Steckerteil und Kupplungsteil auch bei vollständig gestecktem Steckverbinder vorhanden sein können, kann es sein, dass die elektrisch leitenden Abschnitte von Steckerteil und Kupplungsteil keine ausreichende Verbindung miteinander aufweisen, um ein Ableiten der elektrostatischen Aufladung über den Steckverbinder sicherstellen zu können. Zur Abdichtung im Inneren des Steckverbinders zwischen Steckerteil und Kupplungsteil angeordnete O-Ringe führen hierbei zusätzlich zu einer Isolierung zwischen Steckerteil und Kupplungsteil. Derartige O-Ringe aus einem nicht-isolierenden Material, das elektrisch leitfähig wäre, herzustellen, würden jedoch zu einer starken Einschränkung der Elastizität des O-Rings führen, so dass sich diese Möglichkeit als nicht sinnvoll darstellt. Als problematisch erwiese es sich ferner, dass leitfähige O-Ringe durch das zum Montieren von diesen erforderliche Aufweiten einen Teil ihrer Leitfähigkeit aufgrund des Aufreißens der Leitpfade einbüßten. Zudem würde die Steckkraft, die zum Zusammenstecken von Steckerteil und Kupplungsteil benötigt wird, erheblich erhöht, was ebenfalls sehr nachteilig wäre. Zum Begünstigen des Hereingleitens des Steckerteils in den Kupplungsteil können Fette eingesetzt werden, die allerdings zum Begünstigen einer Leitfähigkeit ebenfalls aus leitfähigem Material bestehen müssten. Hierdurch entstünde die Notwendigkeit, bei der Herstellung von Steckerteil und Kupplungsteil bzw. dem Aufbringen der O-Ringe und des Fettes, die jeweilige Produktionsanlage permanent zu reinigen, vor allem beim Wechsel zwischen unterschiedlichen Fetten, nämlich solchen, die elektrisch leitfähig sind und solchen, die nicht elektrisch leitfähig sind. Hierdurch entstünden enorme Zusatzkosten, die ebenfalls unerwünscht sind. Eine weitere Alternative bestünde darin, eine separate Produktionsanlage vorzusehen, in der nur leitfähige Fette verwendet werden. Hierdurch entstünden jedoch noch höhere Zusatzkosten, die sich insbesondere bei vergleichsweise kleinen Stückzahlen an Steckverbindern mit zumindest teilweise elektrisch leitfähigen Steckerteilen und zumindest teilweise elektrisch leitfähigen Kupplungsteilen nicht lohnen.

Der vorliegenden Erfindung liegt daher die Aufgabe zugrunde, einen Steckverbinder, umfassend zumindest einen zumindest teilweise elektrisch leitfähigen Steckerteil, zumindest einen zumindest teilweise elektrisch leitfähigen Kupplungsteil sowie zumindest ein Steckerteil und Kupplungsteil aneinander fixierendes Halteelement, dahingehend fortzubilden, dass eine gewünschte Leitfähigkeit über den gesamten Steckverbinder hinweg unter Verwendung eines Standardfetts und insbesondere auch eines herkömmlichen O-Rings ermöglicht wird.

Die Aufgabe wird durch die Merkmale des Anspruchs
1 gelöst.

Weiterbildungen der Erfindung sind in den abhängigen Ansprüchen definiert. Dadurch wird ein Steckverbinder geschaffen, der zwischen dem zumindest einen zumindest teilweise elektrisch leitfähigen Steckerteil und dem zumindest einen zumindest teilweise elektrisch leitfähigen Kupplungsteil das zumindest eine zumindest teilweise elektrisch leitfähige Scheibenelement aufweist. Steckerteil und Kupplungsteil werden weiterhin durch das zumindest eine Halteelement aneinander fixiert, wobei Steckerteil und Kupplungsteil über dieses aufeinander gepresst werden. Hierdurch werden die jeweiligen Stirnflächen von Steckerteil und Kupplungsteil gegen das Scheibenelement gepresst, somit wird das Scheibenelement zwischen Steckerteil und Kupplungsteil eingeklemmt

Das Ableiten von unerwünschten elektrischen Ladungen bzw. ein Weiterleiten von Strom über das Scheibenelement kann damit sichergestellt werden.

Um eine besonders großflächige und sichere Anlagefläche von Steckerteil und Kupplungsteil an dem Scheibenelement zu ermöglichen, erweist es sich als besonders vorteilhaft, das zumindest teilweise elektrisch leitfähige Scheibenelement aus einem elastischen und/oder komprimierbaren elektrisch leitfähigen oder leitenden Material auszubilden oder dieses in zumindest einem elektrisch leitfähigen Bereich, der mit Steckerteil und Kupplungsteil in Kontakt gebracht werden soll, zu versehen. Durch das Vorsehen eines solchen elastischen und/oder komprimierbaren elektrisch leitenden Materials kann die Kontaktfläche von Steckerteil und Kupplungsteil mit dem Scheibenelement besonders optimiert werden. Allerdings ist es nicht erforderlich, dass das Scheibenelement vollständig aus einem solchen elastischen und/oder komprimierbaren elektrisch leitfähigen oder leitenden Material besteht. Vielmehr ist es möglich, dass das zumindest teilweise elektrisch leitfähige Scheibenelement aus einer Kombination aus zumindest einem starren Material und zumindest einem elastischen und/oder komprimierbaren Material besteht. Als starres Material kann beispielsweise Metall und/oder Kunststoff verwendet werden. Dieses wird insbesondere in den Bereichen des Scheibenelements angeordnet, die nicht mit dem Steckerteil und dem Kupplungsteil dort in Berührung kommen, wo ein leitfähiger Übergang zwischen Steckerteil und Kupplungsteil vorgesehen werden soll. Das zumindest eine elastische und/oder komprimierbare Material des Scheibenelements wird hingegen vorteilhaft dort angeordnet, wo ein leitender Übergang zwischen dem Scheibenelement und dem Steckerteil einerseits bzw. dem Kupplungsteils andererseits vorgesehen sein soll. Beispielsweise kann auch eine Segmentierung mit Segmenten aus elastischem und/oder komprimierbarem leitenden Material einerseits und dazwischen angeordneten Segmenten aus starrem Material vorgesehen werden. Beispielsweise können Segmente aus leitendem Schaummaterial und Segmente aus Kunststoffmaterial, z.B. Polyamid, abwechseln auf dem Umfang des zumindest teilweise elektrisch leitfähigen Scheibenelements verteilt vorgesehen werden. Die Segmente aus starrem Material weisen dabei vorteilhaft eine Höhe auf, die geringer oder gleich dem geringsten Spaltmaß zwischen den benachbarten stirnseitigen Flächen von Steckerteil und Kupplungsteil während deren Steckvorgangs bemessen ist, um den Steckvorgang nicht zu behindern.

Das zumindest teilweise elektrisch leitfähige Scheibenelement weist eine Komprimierbarkeit auf 20 bis 40% auf. Hierdurch wird sichergestellt,
dass nach dem Zusammenfügen des Steckverbinders, also nach Einstecken des Steckerteils in den Kupplungsteil unter Zwischenfügen des zumindest einen zumindest elektrisch leitfähigen Scheibenelements und Anordnens des zumindest einen Halteelements an Steckerteil und Kupplungsteil lediglich ein geringes Spiel zwischen Steckerteil und Kupplungsteil belassen wird. Ein mögliches Spiel wird durch Toleranzen innerhalb der Verbindung aus Steckerteil, Kupplungsteil und Halteelement verursacht, die einen mehr oder weniger großen Abstand zwischen stirnseitigen Flanschen von Steckerteil und Kupplungsteil zulassen und somit Einfluss auf die jeweilige Relativposition von Steckerteil und Kupplungsteil zueinander haben, und dementsprechend auf den Grad der Komprimierung des zwischen Steckerteil und Kupplungsteil eingefügten zumindest teilweise elektrisch leitfähigen Scheibenelements. Zugleich wird durch die Komprimierbarkeit ein sicheres axiales Stecken von Steckerteil und Kupplungsteil und bei axialem Aufbringen des Halteelements auch ein Überstecken ermöglicht, also ein Stecken von Steckerteil und Kupplungsteil über die Steck-Endposition hinaus, um ein Ineinandergreifen von Flächen an Steckerteil, Kupplungsteil und Halteelement sicherzustellen. Während des Übersteckens wird das Scheibenelement maximal komprimiert bzw. gestaucht. Das Scheibenelement kann hierbei, jedoch auch in der endgültigen Position von Steckerteil und Kupplungsteil des Steckverbinders, als axiales Federelement zwischen diesen dienen. Als besonders vorteilhaft erweist es sich daher, das zumindest teilweise elektrisch leitfähige Scheibenelement 10 bis 40% dicker als den Abstand zwischen dem zumindest einen Steckerteil und dem zumindest einen Kupplungsteil im gesteckten Zustand auszubilden, somit mit einer 10 bis 40% größeren Höhe als dem axialen Abstand von Stirnflächen zwischen dem zumindest einen Steckerteil und dem zumindest einen Kupplungsteil im gesteckten Zustand des Steckverbinders entspräche. Das zumindest teilweise elektrisch leitfähige Scheibenelement weist beispielsweise eine Höhe von 0,1 mm im komprimierten Zustand bis 1,0 mm im nicht komprimierten Zustand auf, vorteilhaft 0,2 mm im komprimierten Zustand bis 0,8 mm im nicht komprimierten Zustand. Als besonders vorteilhaft erweist es sich, wenn das zumindest teilweise elektrisch leitfähige Scheibenelement im nicht komprimierten Zustand eine Höhe von zumindest 0,6 mm und im komprimierten Zustand eine Höhe von kleiner gleich 0,4 mm aufweist. Das freie Maß bzw. der Abstand zwischen einem Steckerkragen des Steckerteils und einer Gegenkontur des Kupplungsteils beträgt insbesondere 0,4 bis 0,6 mm, wobei das Scheibenelement dementsprechend jeweils im komprimierten Zustand und im nicht komprimierten Zustand dicker ausgebildet ist. Die maximale Komprimierbarkeit kann somit bei 70 bis 80% der Höhe im nicht-komprimierten Zustand liegen.

Bei der Ausgestaltung des zumindest teilweise elektrisch leitfähigen Scheibenelements als komprimierbares Element wird der Innendurchmesser von diesem durch den Außendurchmesser des Steckerteils in dem Bereich, in dem das Scheibenelement an diesem angeordnet ist und radial anstößt, definiert. Der Außendurchmesser des zumindest teilweise elektrisch leitfähigen Scheibenelements wird durch die Position des Halteelements definiert, an dem das Scheibenelement im komprimierten Zustand mit seiner radialen Außenfläche anstoßen kann. Das zumindest teilweise elektrisch leitfähige Scheibenelement kann als elastisches, zugleich jedoch kaum komprimierbares Scheibenelement ausgebildet sein, wobei beim Druckbeaufschlagen es sich nur in geringem Maße komprimieren lässt. Als Material könnte hier beispielsweise Gummimaterial oder ein geschlossenporiger Schaum verwendet werden.

Ist das zumindest teilweise elektrisch leitfähige Scheibenelement als elastisches, jedoch kaum komprimierbares Scheibenelement ausgebildet, wird das Scheibenelement beispielsweise mit einem geringeren Außendurchmesser versehen als in der Ausgestaltung als komprimierbares Scheibenelement, da beim Stauchen des elastischen Scheibenelements auf eine Höhe von 0,2 mm bis 0,8 mm dieses sich radial ausweitet. Um dies zu ermöglichen, kann dementsprechend das zumindest teilweise elektrisch leitfähige Scheibenelement in der Ausgestaltung als elastisches Scheibenelement mit einem geringeren Außendurchmesser versehen sein als in der Ausgestaltung als komprimierbares Scheibenelement. Bei dem vorstehend bereits genannten segmentierten Ausbilden des Scheibenelements kann eine elastische seitliche Verformung mit radialer Ausdehnung bzw. Aufweitung ebenfalls ermöglicht werden. Insbesondere kann das Scheibenelement zum Ermöglichen einer solchen radialen Ausdehnung beim Stauchen mit einem um 10 bis 15% geringeren Außendurchmesser als der Steckerkragen des Steckerteils versehen sein, der außenseitig an dem Halteelement anliegt. Im Bereich der inneren Durchgangsöffnung des Scheibenelements, die am Steckerteil zumindest teilweise außenseitig anliegt, kann dieses unregelmäßig, also insbesondere mit vor- und rückspringenden zahnartigen Formgebungen versehen sein, um beim Stauchen auch eine radiale Ausweitung nach innen in Richtung des Steckerteils zu ermöglichen.

Das zumindest teilweise elektrisch leitfähige Scheibenelement kann ferner flach und/oder zumindest teilweise bauchig und/oder zumindest teilweise mit Erhebungen und/oder Nuten versehen ausgebildet sein. Insbesondere ist es möglich, das zumindest teilweise elektrisch leitfähige Scheibenelement im Querschnitt linsenkopfförmig auszubilden. Hierdurch wird eine Oberflächenvergrößerung erzielt, die beim Komprimieren bzw. Stauchen des zumindest teilweise elektrisch leitfähigen Scheibenelements zu einer besonders guten Anlage von Steckerteil und Kupplungsteil-an diesem und somit zu einem optimalen Leiten von elektrostatischer Ladung vom Steckerteil zum Kupplungsteil über das Scheibenelement hinweg führt. Das Scheibenelement kann somit flach nach Art einer Unterlegscheibe und/oder zumindest teilweise mit Erhebungen bzw. Nuten und/oder zumindest teilweise bauchig ausgebildet sein, z.B. ähnlich wie ein Linsenkopf oder ein O-Ring.

Ebenfalls ist es möglich, das zumindest teilweise elektrisch leitfähige Scheibenelement an den zumindest einen Steckerteil anzuformen, insbesondere als Zweikomponententeil an diesen anzuspritzen. Das Scheibenelement wird hierbei als Zweikomponenten-Spritzgussteil ausgebildet und somit direkt fest mit dem Steckerteil verbunden. Insbesondere wird es auf dem Steckerkragen des Steckerteils aufgebracht, so dass ein noch schnelleres Zusammenstecken mit dem Kupplungsteil möglich wird, da das Scheibenelement nicht erst auf den Steckerteil aufgesteckt zu werden braucht. Als sehr vorteilhaft erweist sich das verliersichere Anformen des Scheibenelements, so dass es am Steckerteil bei einer Wiedermontage des Steckerteils, also nach Lösen vom Kupplungsteil bei einem nachfolgenden erneuten Zusammenstecken mit diesem oder einem anderen Kupplungsteil, verbleibt bzw. nicht verloren geht.

Das zumindest teilweise elektrisch leitfähige Scheibenelement kann aus unterschiedlichsten Materialien bestehen. Insbesondere eignet sich zum elastischen Ausbilden die Verwendung von zumindest einem Gummimaterial. Beispielsweise kann das zumindest teilweise elektrisch leitfähige Scheibenelement aus zumindest einem der nachstehenden leitfähig ausgebildeten Materialien bestehen, wie leitfähigem EPDM (Ethylen-Propylen-Dien-Kautschuk), NBR (Acrylnitril-Butadien-Kautschuk), FKM (Fluorkautschuk), VMQ (Silikon-Kautschuk). Ferner ist es möglich, dass das zumindest teilweise elektrisch leitfähige Scheibenelement zumindest ein Schaummaterial aufweist. Insbesondere kann das Scheibenelement aus zumindest einem geschlossenzelligen Schaummaterial bestehen. Hierdurch ist es möglich, dass es auch bei Feuchtigkeit und niedrigen Temperaturen, die zu einem Vereisen führen, komprimierbar bleibt, somit seine Funktionsfähigkeit auch bei sehr niedrigen Temperaturen sicher aufrechterhalten kann. Durch die Verwendung von geschlossenzelligem Schaummaterial führt Feuchtigkeit nicht zu einem Einlagern von Wasser im Schaummaterial und somit weder zu einem Beschädigen desselben beim Gefrieren noch zu einer evtl. Herabsetzung der Leitfähigkeit aufgrund von Eisbildung.

Der zumindest eine elektrisch leitfähige Bereich des zumindest teilweise elektrisch leitfähigen Scheibenelements weist bevorzugt einen Widerstand von kleiner gleich 1 × 10⁴ Ω auf, wobei der Widerstand des Bauteils insbesondere bei kleiner gleich 1 × 10⁶ Ω, der des Materials bei kleiner gleich 1 × 10⁴ Ω m bei einer Systemgrenze des Gesamtsystems aus Steckerteil, Kupplungsteil und elektrisch leitfähigem Scheibenelement bei kleiner gleich 1 × 10⁸ Ω liegt. Bei Vorsehen einer solchen Leitfähigkeit bzw. eines solchen Widerstandes ist es möglich, eine ausreichende Menge an Strom bzw. elektrostatischer Aufladung über den Steckverbinder abzuleiten.

Der Kupplungsteil kann insbesondere Teil eines Aggregats oder als Einschraubstutzen ausgebildet sein. Ferner ist es möglich, den Kupplungsteil teilweise an einem Aggregat angeformt auszubilden. Ebenfalls ist es möglich, den Kupplungsteil als Gegenstecker oder als zum Anschlussverbinden einer Rohrleitung und einer Schlauchleitung geeignetes Kupplungsteil auszubilden. Der Einschraubstutzen bzw. der als Teil des Aggregats oder als Gegenstecker oder als Kupplungsteil zum Anschlussverbinden von Rohrleitung und Schlauchleitung ausgebildete Kupplungsteil kann beispielsweise aus Aluminium oder Messing bestehen. Ebenfalls ist es möglich, ihn aus Stahl oder einem durchgängig leitfähigen Kunststoffmaterial herzustellen. Über den Kupplungsteil bzw. Einschraubstutzen erfolgt das Ableiten der elektrostatischen Aufladung, die beispielsweise bei Ausbilden eines Aggregats in Form eines Kraftstofftanks von diesem ferngehalten werden soll, um Explosionen zu vermeiden.

Als weiter vorteilhaft erweist es sich, das zumindest eine Halteelement, das zum Zusammenhalten von Steckerteil und Kupplungsteil des Steckverbinders dient, zumindest teilweise elektrisch leitfähig auszubilden. Dieses kann besonders vorteilhaft aus dem gleichen Werkstoff bestehen wie der zumindest eine zumindest teilweise elektrisch leitfähige Steckerteil. Beispielsweise kann als Material für das Halteelement und den Steckerteil PA66CF20 gewählt werden. Hierdurch ist es möglich, sogar ohne Vorsehen des zumindest teilweise elektrisch leitfähigen Scheibenelements ein Weiterleiten elektrostatischer Ladung bzw. von Strom vom Steckerteil zum Kupplungsteil (oder umgekehrt) über das Halteelement zu ermöglichen.

Um im Bereich des zumindest teilweise elektrisch leitfähigen Halteelements eine sowohl bei Druckbeaufschlagung als auch bei Saugbeaufschlagung bzw. auch bei Fertigungstoleranzen, die zu einem verbleibenden Luftspalt zwischen Steckerteil und Halteelement bzw. Halteelement und Kupplungsteil führen, eine gleichbleibend gute Anlage des Halteelements am Steckerteil und am Kupplungsteil zum Ableiten elektrostatischer Aufladungen über das Halteelement zu ermöglichen, kann zusätzlich ein axiales Vorspannelement vorgesehen werden. Das axiale Vorspannelement kann eine solche jederzeitige Anlage von Flächen des Halteelements, die elektrisch leitfähig ausgebildet sind, an Flächen des zumindest teilweise elektrisch leitfähigen Steckerteils und Kupplungsteils in deren elektrisch leitfähigen Abschnitten bzw. Bereichen ermöglichen. Durch ein solches axiales Vorspannelement, das Steckerteil und Kupplungsteil axial auseinander und somit gegen die vorkragenden Schenkel des im Längsschnitt und in der Draufsicht c-förmigen, also doppel-c-förmigen, Halteelements drückt, wird ein optimales Anliegen der Flächen von Steckerteil und Halteelement sowie Kupplungsteil und Halteelement sichergestellt. Alternativ oder zusätzlich kann ein nicht oder nur wenig leitendes oder leifähiges Scheibenelement zwischen Steckerteil und Kupplungsteil angeordnet werden, das beide in Richtung der Anlage am Halteelement drückt zum Schaffen einer optimalen Flächenanlage der Flächen von Steckerteil und Halteelement sowie Kupplungsteil und Halteelement.

Durch das Vorsehen zumindest eines Kontaktelementes an Steckerteil und/oder Kupplungsteil zum elektrisch leitenden Verbinden von Steckerteil und Kupplungsteil im gesteckten Zustand von diesen kann sichergestellt werden, dass der Steckerteil stets in elektrisch leitendem Kontakt mit dem Kupplungsteil steht. Hierdurch ist es möglich, auch ohne das Vorsehen zumindest eines zumindest teilweise elektrisch leitfähigen Scheibenelements und auch ohne Vorsehen zumindest eines zumindest teilweise elektrisch leitfähigen Halteelements auszukommen. Beispielsweise kann im Bereich eines Steckerschafts des Steckerteils ein solches Kontaktelement beispielsweise durch Anformen zumindest einer dort abstehenden Kontaktlasche ausgebildet werden. Eine solche Kontaktlasche bzw. ein solches Kontaktelement kontaktiert im gesteckten Zustand den Kupplungsteil, so dass eine elektrisch leitfähige Verbindung von beiden, dem zumindest einen Steckerteil und dem zumindest einen Kupplungsteil des Steckverbinders, geschaffen wird zum Ableiten elektrostatischer Aufladungen über den Steckverbinder.

Zur näheren Erläuterung der Erfindung werden im Folgenden Ausführungsbeispiele von dieser näher anhand der Zeichnungen beschrieben. Diese zeigen in:
- Figur 1: eine teilweise geschnittene Seitenansicht eines erfindungsgemäßen Steckverbinders mit Steckerteil und Kupplungsteil sowie dazwischen angeordnetem erfindungsgemäßem elektrisch leitfähigen Scheibenelement,
- Figur 2: eine Detailansicht im Bereich des Halteelements des Steckverbinders gemäß Figur 1,
- Figur 3: die Detailansicht des Steckverbinders gemäß Figur 2, jedoch ohne zwischen Steckerteil und Kupplungsteil sowie Halteelement eingefügtem Scheibenelement, wobei das Halteelement jedoch zumindest teilweise elektrisch leitfähig ausgebildet ist,
- Figur 4: eine perspektivische Ansicht des Steckerteils des Steckverbinders gemäß Figur 1,
- Figur 5: eine Rückansicht des Steckerteils gemäß Figur 4,
- Figur 6: eine Längsschnittansicht des Steckteils gemäß Figur 4,
- Figur 7: eine Seitenansicht des Steckerteils gemäß Figur 4,
- Figur 8: eine Draufsicht auf das Scheibenelement des Steckverbinders gemäß Figur 1,
- Figur 9: eine Seitenansicht des Scheibenelements gemäß Figur 8,
- Figur 10: eine Seitenansicht einer zweiten Ausführungsform eines erfindungsgemäßen linsenkopfförmig ausgebildeten zumindest teilweise elektrisch leitfähigen-Scheibenelements,
- Figur 11: eine Draufsicht einer dritten Ausführungsform eines erfindungsgemäßen segmentiert ausgebildeten zumindest teilweise elektrisch leitfähigen Scheibenelements, das Segmente aus Schaummaterial und aus starrem Material aufweist,
- Figur 12: eine Querschnittsansicht einer vierten Ausführungsform eines erfindungsgemäßen zumindest teilweise elektrisch leitfähigen Scheibenelements, das übereinander angeordnet eine Lage aus einem Schaummaterial und eine Lage aus einem leitfähigen Kunststoffmaterial aufweist,
- Figur 13: eine perspektivische Ansicht des Halteelements des Steckverbinders gemäß Figur 1,
- Figur 14: eine Unteransicht des Halteelements gemäß Figur 13,
- Figur 15: eine Draufsicht auf das Halteelement gemäß Figur 13,
- Figur 16: eine Schnittansicht entlang der Linie C-C des Halteelements gemäß Figur 15,
- Figur 17: eine Längsschnittansicht einer nicht erfindungsgemäßen Ausführungsform eines Steckerteils eines Steckverbinders, wobei endseitig am Steckerschaft des Steckerteils ein abstehendes Kontaktelement angeformt ist,
- Figur 18: eine Längsschnittansicht einer nicht erfindungsgemäßen Ausführungsform eines Steckerteils eines Steckverbinders, wobei endseitig am Steckerschaft des Steckerteils ein abstehendes Kontaktelement angeformt ist,
- Figur 19: eine Querschnittsansicht eines nicht erfindungsgemäßen Steckverbinders im Bereich von ineinander gestecktem Steckerteil und Kupplungsteil, wobei am Steckerschaft des Steckerteils ein teilweise über den Außenumfang des Steckerteils vorkragendes Kontaktelement angeordnet ist und den Kupplungsteil auf dessen inneren Umfang kontaktiert,
- Figur 20: eine teilweise Längsschnittansicht einer nicht erfindungsgemäßen Ausführungsform eines Steckverbinders, wobei endseitig an dem Steckerschaft des aus leitfähigem Material ausgebildeten Steckerteils ein abstehendes Kontaktelement angeformt ist,
- Figur 21: eine Querschnittsansicht des Steckverbinders gemäß Figur 20 entlang der Linie I-I, und
- Figur 22: eine perspektivische Ansicht des Steckerteils des Steckverbinders gemäß Figur 20.

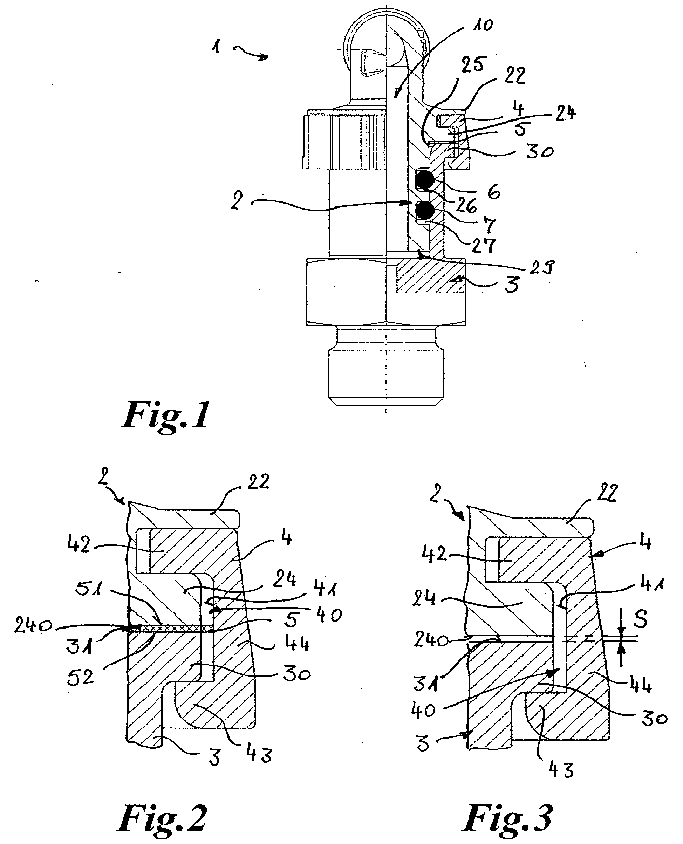

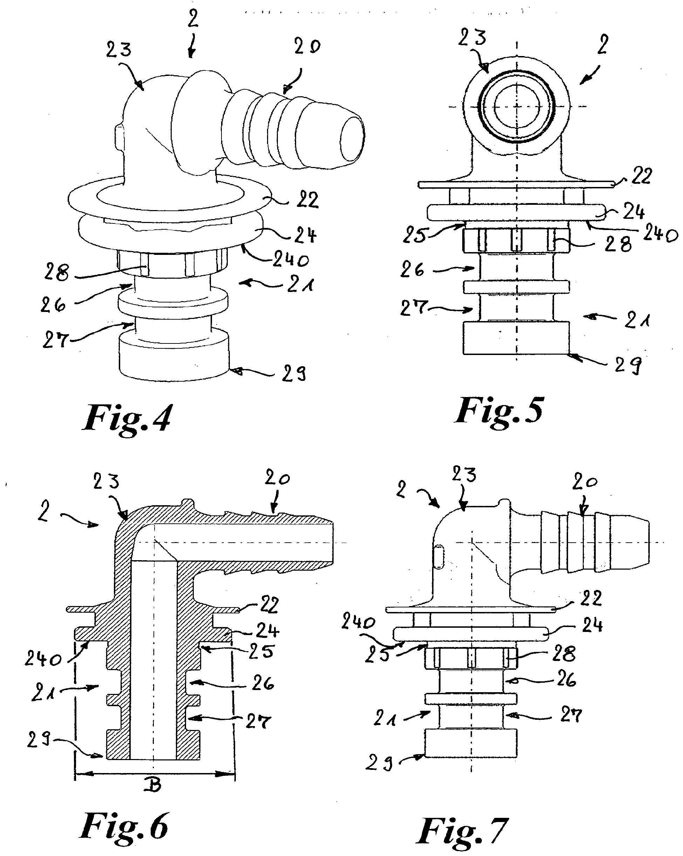

In Figur 1 ist eine Seiten- und teilweise Schnittansicht eines Steckverbinders 1 mit einem Steckerteil 2, einem Kupplungsteil 3 und einem Halteelement 4 gezeigt. Wie den Figuren 4 bis 7 entnommen werden kann, ist der Steckerteil 2 als WinkelSteckerteil ausgebildet. Es wäre auch möglich, diesen als geraden Steckerteil auszubilden. Der in den Figuren 4 bis 7 gezeigte Winkel-Steckerteil 2 weist einen Anschlussabschnitt 20, der als Dornabschnitt ausgebildet ist, auf, um auf diesem insbesondere eine Schlauchleitung oder Rohrleitung durch Aufdornen befestigen zu können. Ferner weist der Steckerteil 2 einen Steckerschaftabschnitt 21 und einen gewinkelten Übergangsabschnitt 23 zwischen Anschlussabschnitt 20 und Steckerschaftabschnitt 21 auf. Der Steckerschaftabschnitt 21 dient dem Verbinden mit dem Kupplungsteil 3. Der Steckerschaftabschnitt 21 umfasst in der hier gezeigten Ausführungsvariante einen ersten auskragenden Kragenabschnitt 22, der sich an den gewinkelten Übergangsabschnitt 23 anschließt. Ein solcher Kragenabschnitt 22 kann bei anderen Ausgestaltung des Steckerteils auch nicht vorgesehen sein. In Richtung weg von dem gewinkelten Übergangsabschnitt 23 springt der Steckerschaftabschnitt 21 hinter dem Kragenabschnitt 22 zunächst zurück, um danach einen zweiten auskragenden Kragenabschnitt 24 zu bilden. Weiter weggehend von dem gewinkelten Übergangsabschnitt 23 springt der Steckerschaftabschnitt 21 hinter dem zweiten auskragenden Kragenabschnitt 24 wiederum zurück und bildet in der hier gezeigten Ausführungsform eine Nut 25. Diese kann bei einer anderen Ausgestaltung des Steckerteils 2 auch nicht vorhanden sein. In dieser Nut 25 ist ein Scheibenelement 5 angeordnet, das zumindest teilweise elektrisch leitfähig ist. Auf dieses wird im Folgenden insbesondere unter Bezug auf die Figuren 2, 8 und 9 noch näher eingegangen. Sich weiter weg von dem gewinkelten Übergangsabschnitt 23 in Richtung des distalen Endes 29 des Steckerschaftabschnitts 21 erstreckend sind zwei weitere Nuten 26, 27 am Steckerschaftabschnitt 21 angeordnet, die der Aufnahme von zwei O-Ringen 6, 7 dienen. Die beiden O-Ringe 6, 7 dienen dem Abdichten des Steckerteils 2 in dem Kupplungsteil 3, um eine Leckage von durch den Steckverbinder 1 durch dessen innere Durchgangsöffnung 10 strömendem Medium nach außen aus diesem heraus sicher vermeiden zu können..

Der Kupplungsteil 3 weist endseitig, als Gegenkontur zu dem zweiten auskragenden Kragenabschnitt 24 des Steckerteils 2, einen auskragenden Flanschabschnitt 30 auf. Zwischen einer Stirnseite 31 des auskragenden Flanschabschnitts 30 und der in Richtung des auskragenden Flanschabschnitts 30 gerichteten Außenfläche 240 des zweiten auskragenden Kragenabschnitts 24 ist das Scheibenelement 5 aufgenommen. Sowohl der Steckerteil 2 als auch der Kupplungsteil 3 sind zumindest in diesem Bereich elektrisch leitfähig ausgebildet, ebenso wie das Scheibenelement 5. Somit ist über den Steckerteil 2, das Scheibenelement 5 und den Kupplungsteil 3 ein Ableiten einer elektrostatischen Aufladung, die beim Strömen eines Mediums innerhalb des Steckverbinders 1 und einer an diesem angeschlossenen Leitung durch Reibung auftreten kann, möglich. Der Kupplungsteil 3 kann beispielsweise an einem Aggregat, wie einem Tank, insbesondere Kraftstofftank, befestigt werden und beispielsweise in Form eines Einschraubstutzens ausgebildet sein. Beim Strömen von Kraftstoff kann es zu der unerwünschten elektrostatischen Aufladung durch Reibung entlang der Wandung der sich an den Steckverbinder 1 anschließenden Fluidleitung kommen, so dass ein Ableiten von dieser über den Steckverbinder 1 sich als sehr vorteilhaft erweist. Zu diesem Zweck werden der Steckerteil 2, das Scheibenelement 5 und der Kupplungsteil 3 zumindest teilweise elektrisch leitfähig ausgebildet. Als Material eignet sich beispielsweise leitfähiger Kunststoff für den Steckerteil 2, wie beispielsweise PA66CF20. Das Kupplungsteil 3 kann aus einem Metall, wie beispielsweise Aluminium, Messing oder Stahl bestehen oder auch aus einem leitfähigen Kunststoffmaterial.

Um eine möglichst gute elektrische Leitung über das zumindest teilweise elektrisch leitfähige Scheibenelement 5 hinweg sicherzustellen, ist dieses elastisch und/oder komprimierbar ausgebildet. Das Scheibenelement kann daher beispielsweise zumindest teilweise aus einem Gummimaterial und/oder einem Schaummaterial, wie beispielsweise einem PU-basiertem Schaummaterial, bestehen, das durch Zusatzstoffe elektrisch leitfähig ausgebildet wird. Auch bei Verwendung eines Gummimaterials wird dieses durch Zusatzstoffe elektrisch leitfähig ausgebildet. Das Material des Scheibenelements weist-in dessen leitfähigem Bereich oder Bereichen insbesondere eine Leitfähigkeit von kleiner gleich 1 × 10⁴ Ωm auf. Um zu verhindern, dass aufgrund von Wasseraufnahme bei Verwendung eines Schaummaterials für das Scheibenelement die Leitfähigkeit bei Frost sinkt oder das Scheibenelement durch Eisdruck beim Gefrieren beschädigt oder zerstört wird, wird vorteilhaft ein geschlossenzelliges Schaummaterial für das Scheibenelement gewählt. Die Komprimierbarkeit des Scheibenelements kann beispielsweise auf 20 bis 40% liegen. Das Scheibenelement kann in der Ausgangsposition dementsprechend beispielsweise eine 10 bis 40% größere Höhe h aufweisen als einem Spalt S zwischen der Stirnseite 31 des auskragenden Kragenabschnitts 30 des Kupplungsteils 3 und der Außenfläche 240 des zweiten auskragenden Kragenabschnitts 24 des Steckerteils 2 entspräche. Der Spalt S kann beispielsweise 0,4 bis 0,6 mm , betragen, so dass das Scheibenelement ggf bis auf 0,4 mm komprimiert wird. Im nicht komprimierten Zustand weist das Scheibenelement dementsprechend bei einem Spaltmaß von 0,6 mm eine Höhe von mehr als 0,6 mm auf, um ein Komprimieren und dementsprechend gleichmäßig flächiges Anliegen der Außenseite 240 des zweiten auskragenden Kragenabschnitts 24 des Steckerteils 2 und der Stirnseite 31 des auskragenden Flanschabschnitts 30 des Kupplungsteils 3 an zwei gegenüberliegenden Außenseiten 51, 52 des Scheibenelements 5 zu ermöglichen. Je nach Dimensionierung des Spaltmaßes kann das Scheibenelement im komprimierten Zustand einerseits und im nicht komprimierten Zustand andererseits beispielsweise auch eine Höhe h von 0,2 mm (im komprimierten Zustand) bis 0,8 mm (im nicht komprimierten Zustand) oder ggf. 0,1 mm (im komprimierten Zustand) bis 1,0 mm (im nicht komprimierten Zustand), ggf. sogar bis zu 2 mm im nicht komprimierten Zustand aufweisen. Beispielsweise weist das Scheibenelement im nicht komprimierten Zustand eine Höhe h von zumindest 0,6 mm und im komprimierten Zustand eine Höhe von kleiner gleich 0,4 mm auf.

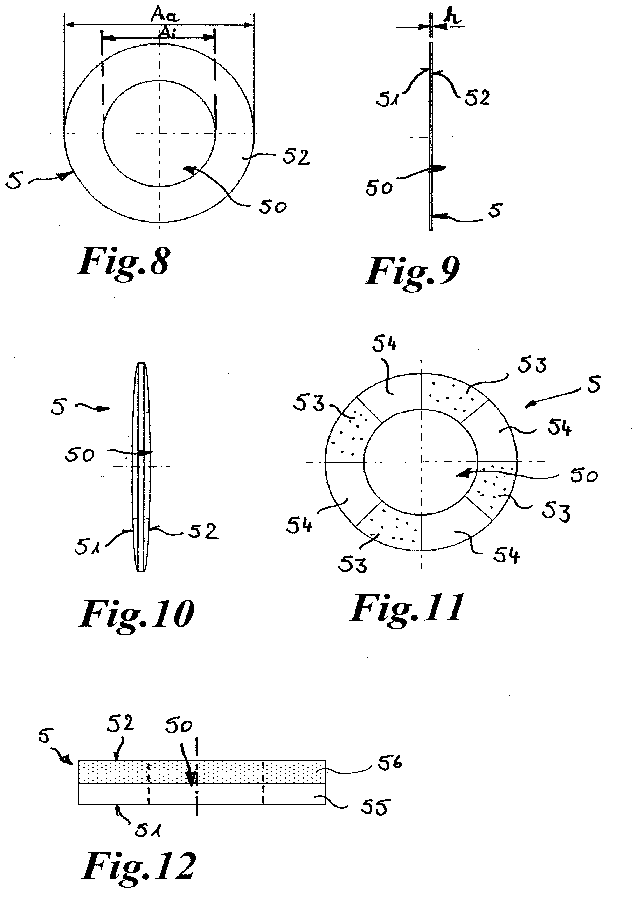

Um eine gleichmäßige und vollständige Anlage des Scheibenelementes vollflächig an der Außenseite 240 des zweiten auskragenden Kragenabschnitts 24 des Steckerteils 2 und der Stirnseite 31 des auskragenden Flanschabschnitts 30 des Kupplungsteils 3 sicherstellen zu können, kann das zumindest teilweise elektrisch leitfähige Scheibenelement 5 Oberflächenvergrößerungsmittel, wie beispielsweise Nuten und Erhebungen und/oder eine bauchige Formgebung, insbesondere eine Linsenkopfform, aufweisen. Bei Vorsehen insbesondere einer bauchigen oder Linsenkopfform, wie sie beispielhaft in Figur 10 gezeigt ist, erstreckt sich bzw. dehnt sich das Scheibenelement 5 in radialer Richtung während des Komprimierens aus. Dasselbe gilt auch für Nuten und Erhebungen in der Oberfläche des Scheibenelementes 5. Wie insbesondere Figur 2 zu entnehmen ist, streckt sich das Scheibenelement 5 insbesondere im komprimierten bzw. gestauchten Zustand radial aus. Daher kann es im nicht komprimierten oder gestauchten Zustand beispielsweise einen Außendurchmesser aufweisen, der 10 bis 15% geringer ist als der Außendurchmesser des zweiten auskragenden Kragenabschnitts 24 des Steckerteils 2 bzw. des auskragenden Flanschabschnitts 30 des Kupplungsteils 3.

Wie der Draufsicht auf das Scheibenelement 5 in Figur 8 zu entnehmen ist, weist dieses eine innere Durchgangsöffnung 50 auf. Diese wird den Steckerteil 2 bzw. den Steckerschaftabschnitt 21 umgebend innerhalb der Nut 25 von diesem angeordnet. Dementsprechend wird ein radiales Aufweiten des Scheibenelements 5 im komprimierten oder gestauchten Zustand in Richtung des Steckerschaftabschnitts 2 bei dessen Anlage an dessen Außenfläche im Bereich der Nut 25 begrenzt. Hingegen kann sich das Scheibenelement 5 in einen umlaufenden Spalt 40 hinein, der zwischen dem Halteelement 4 und dem zweiten auskragenden Kragenabschnitt 24 sowie dem auskragenden Flanschabschnitt 30 von Steckerteil 2 und Kupplungsteil 3 vorgesehen ist, erstrecken, wie dies Figur 2 zu entnehmen ist. Die maximale radiale Ausdehnung des Scheibenelements wird durch Anlage an der Innenseite 41 des doppel-c-förmig ausgebildeten, also des in der Draufsicht und im Profil c-förmig ausgebildeten, Halteelements 4 begrenzt. Bei Vorsehen eines Scheibenelements 5 aus elastischem Material, das kaum komprimierbar ist, kann der Außendurchmesser Aₐ des zumindest teilweise elektrisch leitfähigen Scheibenelements 5 geringer bemessen sein als der Außendurchmesser B des Steckerteils 2 im Bereich des zweiten auskragenden Kragenabschnitts 24 (siehe Figur 6) bzw. des auskragenden Flanschabschnitts 30 des Kupplungsteils 3. Hierbei ist es möglich, die Stauchung des Scheibenelementes in eine radiale Ausweitung umzuwandeln, wobei bei maximaler Stauchung des Scheibenelements dieses radial auf der Innenseite 41 des Halteelements 4 anliegt, wie in Figur 2 gezeigt. Ist das Scheibenelement 5 als komprimierbares Element ausgebildet, wird der Innendurchmesser Aᵢ der inneren Durchgangsöffnung 50 durch den Außendurchmesser des Steckerschaftabschnitts 21 insbesondere im Bereich der Nut 25 bestimmt und der Außendurchmesser Aₐ des Scheibenelementes 5 durch den Durchmesser des Halteelementes 4 im Bereich von dessen Innenseite 41. Hierbei kann das Scheibenelement 5 wiederum an der Innenseite 41 des Halteelements 4 anliegen, wie in Figur 2 gezeigt.

Im Bereich der inneren Durchgangsöffnung 50 des Scheibenelements 5 kann anstelle der glatten Formgebung, wie sie in Figur 8 gezeigt ist, eine gewellte bzw. mit Vor- und Rücksprüngen, wie einer Verzahnung, versehene Formgebung vorgesehen werden, die ebenfalls ein radiales Ausdehnen jeweils in die Zwischenbereiche der Zähne der Innenverzahnung der inneren Durchgangsöffnung 50 ermöglicht.

Wie in den Figuren 11 und 12 beispielhaft gezeigt, kann das zumindest teilweise elektrisch leitfähige Scheibenelement auch aus der Kombination aus zumindest einem starren Material und zumindest einem elastischen und/oder komprimierbaren Material bestehen. Bei der Ausgestaltung des zumindest teilweise elektrisch leitfähigen Scheibenelements 5 nach Figur 11 weist dieses eine segmentierte Ausgestaltung auf, wobei über die Ringfläche des Scheibenelements verteilt abwechselnd Segmente aus elektrisch leitfähigem Material, wie z.B. elektrisch leitfähigem Schaummaterial, je nach Ausgestaltung des Schaummaterials einem elastischen und/oder komprimierbaren Material, und Segmente aus einem starren Material, beispielsweise einem Kunststoffmaterial, wie Polyamid, vorgesehen sind. Die Segmente aus starrem Material, hier beispielhaft Polyamid, dienen der Stabilisierung des Scheibenelementes 5. Die Segmente 53 aus elektrisch leitfähigem Material dienen hingegen der elektrischen Leitfähigkeit des Scheibenelements 5, um den gewünschten elektrisch leitfähigen Übergang zum Steckerteil 2 und Kupplungsteil 3 hierüber zu ermöglichen. Anstelle von elektrisch leitfähigem Schaummaterial kann selbstverständlich zumindest ein anderes zumindest teilweise elektrisch leitfähiges Material verwendet werden. Figur 12 zeigt demgegenüber eine Ausgestaltung des zumindest teilweise elektrisch leitfähigen Scheibenelements 5 in einer zweilagigen Ausgestaltung, wobei eine erste Lage 55 aus einem elektrisch leitfähigen Material, wie z.B. zumindest einem Kunststoffmaterial, und eine darüber angeordnete zweite Lage 56 aus einem elastischem und/oder komprimierbarem Material, wie z.B. zumindest einem Schaummaterial, vorgesehen sind. Die zweite Lage 56 aus elastischen und/oder komprimierbaren Material dient dabei dem Vorsehen der gewünschten Elastizität und/oder Komprimierbarkeit des Scheibenelementes. Bei der Ausgestaltung nach Figur 12 sind sowohl das z.B. Schaummaterial, also das elastische und/oder komprimierbare Material, als auch das starre Material, insbesondere Polyamid, elektrisch leitfähig ausgestaltet. Dementsprechend kann das zumindest teilweise elektrisch leitfähige Scheibenelement 5 aus einer beliebigen Kombination aus zumindest einem starren Material und zumindest einem elastischen und/oder komprimierbaren Material bestehen, wobei beispielsweise auch eine Kombination der Ausführungsformen nach Figur 11 und 12 vorgesehen werden kann. Ferner ist es auch bei den Ausgestaltungen des Scheibenelements 5 nach Figur 11 und Figur 12 möglich, diese bauchig bzw. insbesondere in Linsenkopfform, wie in Figur 10 gezeigt, auszuführen oder in einer gleichmäßig flachen Form, wie in Figur 8 und 9 gezeigt, und/oder mit die Oberfläche des Scheibenelements vergrößernden Elementen, wie z.B. den bereits erwähnten Nuten und Erhebungen.

Das Scheibenelement 5 kann nicht nur als separates Element, eingefügt zwischen Steckerteil und Kupplungsteil, ausgebildet werden, sondern auch an den Steckerteil 2 direkt mit angespritzt werden. Dieses wird dann als Zweikomponentenspritzgussteil ausgebildet, angespritzt direkt an den Steckerteil 2 im Bereich von dessen auskragendem Kragenabschnitt 24.

Um den zweiten auskragenden Kragenabschnitt 24 und den auskragenden Flanschabschnitt 30 fest aneinander zu halten, ist das Halteelement 4 vorgesehen, das im Profil c-förmig ist. Dies kann insbesondere den Figuren 2 und 3 entnommen werden, die jeweils eine Längsschnittansicht durch das Halteelement 4 in Anordnung an dem zweiten auskragenden Kragenabschnitt 24 und dem auskragenden Flanschabschnitt 30 zeigen. In den Figuren 10 bis 13 ist das Halteelement 4 im Detail gezeigt. Erkennbar ist dieses auch in der Draufsicht c-förmig.

Bei Vorsehen des Scheibenelementes 5 ist nicht nur ein sicheres Stecken, sondern auch Überstecken von Steckerteil 2 und Kupplungsteil 3 möglich zum Verrasten bzw. Hintergreifen von ineinander greifenden Flächen an Steckerteil, Kupplungsteil und Halteelement Dies wird durch Verwenden des elastischen und/oder komprimierbaren Materials des Scheibenelements 5 problemlos ermöglicht. Steckerteil 2 und Kupplungsteil 3 des Steckverbinders 1 weisen durch das Zwischenfügen des Scheibenelementes 5 lediglich ein geringes Spiel auf, wobei Steckerteil 2 und Kupplungsteil 3 durch das Halteelement 4 klammerartig zusammengehalten werden, wie insbesondere den Figuren 1 bis 3 zu entnehmen ist. Um zusätzlich oder alternativ zu dem Weiterleiten von elektrischer Ladung vom Steckerteil 2 zum Kupplungsteil 3 und dementsprechend Ableiten dieser Ladung vor Erreichen insbesondere eines Kraftstofftanks sicher zu ermöglichen, kann auch das Halteelement 4 zumindest teilweise elektrisch leitend ausgebildet werden. Da dieses, wie insbesondere Figur 3 entnommen werden kann, zum Weiterleiten elektrischer Ladung zwischen Steckerteil 2 und Kupplungsteil 3 auch ohne Anordnen des Scheibenelements 5 verwendet werden kann, werden sichere leitende Übergänge zwischen Steckerteil 2 und Halteelement 4 sowie Halteelement 4 und Kupplungsteil 3 im Bereich des zweiten auskragenden Kragenabschnitts 24 des Steckerteils 2, des auskragenden Flanschabschnitts 30 des Kupplungsteils 3 und der beiden vorkragenden Abschnitte bzw. Schenkel 42, 43 des im Profil bzw. Längsschnitt C-förmigen Halteelements 4 geschaffen. Durch Vorsehen eines zumindest teilweise elektrisch leitfähigen Halteelements, das insbesondere im Bereich seiner beiden vorkragenden Abschnitte 42, 43 sowie des dazwischen angeordneten Abschnitt 44 elektrisch leitfähig ist, kann ein Ableiten elektrostatischer Aufladung vom Steckerteil 2 über den vorkragenden Abschnitt 42, den Abschnitt 44 sowie den vorkragenden Abschnitt 43 und den auskragenden Flächenabschnitt 30 des Kupplungsteils 3 erfolgen. Um auch ohne Vorsehen des Scheibenelementes 5, sofern dieses nicht zwischen Steckerteil 2 und Kupplungsteil 3 angeordnet werden soll, ein Ableiten von elektrischer Ladung bzw. Strom zu ermöglichen, kann.ein axiales Vorspannelement beispielsweise in Form eines axialen Federelementes insbesondere zwischen Steckerteil 2 und Kupplungsteil 3 angeordnet werden. Hierdurch werden Steckerteil 2 und Kupplungsteil 3 in Richtung der jeweiligen vorkragenden Abschnitte 42, 43 des Halteelements 4 gedrückt und somit eine axiale Federvorspannung in Richtung der beiden Abschnitte 42, 43 des Halteelements 4 erzeugt. Der zweite auskragende Kragenabschnitt 24 des Steckerteils 2 sowie der auskragende Flanschabschnitt 30 des Kupplungsteils 3 liegen dann besonders gut an den vorkragenden Abschnitten 42, 43 des Halteelements 4 an, um ein optimales Ableiten elektrischer Aufladungen über den Steckverbinder 1 zu ermöglichen. Nicht nur der Steckerteil 2, sondern auch das Halteelement 4 kann hierfür beispielsweise aus PA66CF20 bestehen

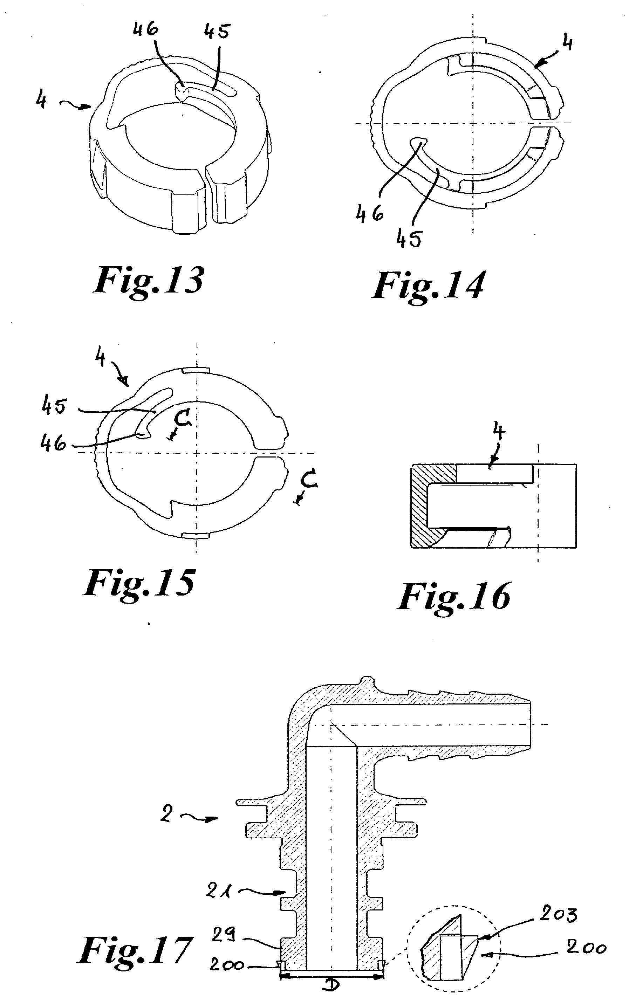

Die Figuren 13 bis 16 zeigen das Halteelement 4 in perspektivischer Ansicht sowie in einer Ansicht von unten und von oben und in Schnittansicht entlang der Linie C-C. Hierbei ist erkennbar, dass das Halteelement 4 einen Rastarm 45 mit endseitigem Rastnocken 46 aufweist, der sich im Innern des auch in der Draufsicht c-förmigen Halteelements 4 erstreckt. Mit dem Rastarm 45 bzw. Rastnocken 46 hintergreift das Halteelement 4 einen entsprechenden Vorsprung bzw. eine Nut 28 am Steckerschaftabschnitt 21, wie sie beispielhaft in den Figuren 4, 5 und 7 zu sehen ist. Hierüber hält sich das Halteelement 4 verdrehsicher am Steckerteil 2 fest und untergreift aufgrund seiner doppelten C-Form den Kupplungsteil 3 im Bereich von dessen auskragenden Flanschabschnitt 30, wie in Figur 2 und 3 gezeigt.

In den Figuren 17 bis 19 sind drei verschiedene nicht erfindungsgemäßen Ausführungsvarianten von Steckerteilen 2 gezeigt, bei denen endseitig am Steckerschaftabschnitt 21 jeweils ein Kontaktelement 200 bzw. 201 bzw. 202 angeformt ist. Das in Figur 17 endseitig an den Steckerschaftabschnitt 21 des Steckerteils 2 angeformte Kontaktelement 200 ist über den äußeren Umfang bzw. den Außendurchmesser D des distalen Endes 29 des Steckerschaftsabschnittes 21 vorkragend ausgebildet. Das Kontaktelement 200 weist hierbei eine in Richtung des Endes des distalen Endes 29 konisch zulaufende Formgebung auf. Dementsprechend kann der Steckerschaftabschnitt 21 mit seinem distalen Ende 29 problemlos in den Kupplungsteil 3 (in Figur 17 nicht gezeigt) hineingleiten. Das konisch zulaufende Kontaktelement 200 stützt sich nachfolgend insbesondere mit seinem am weitesten auskragenden Abschnitt 203 auf der Innenseite der inneren Durchgangsöffnung des Kupplungsteils 3 ab. Über diesen Kontaktbereich ist eine elektrisch leitfähige Verbindung zwischen Steckerteil 2 und Kupplungsteil 3 möglich, so dass auch ohne Vorsehen des zumindest teilweise elektrisch leitfähigen Scheibenelements 5 bzw. des zumindest teilweise elektrisch leitfähigen Halteelements 4 ein Ableiten von elektrostatischen Aufladungen über das Kontaktelement 200 und dementsprechend über den Steckverbinder 1 aus Steckerteil 2 und Kupplungsteil 3 möglich ist.

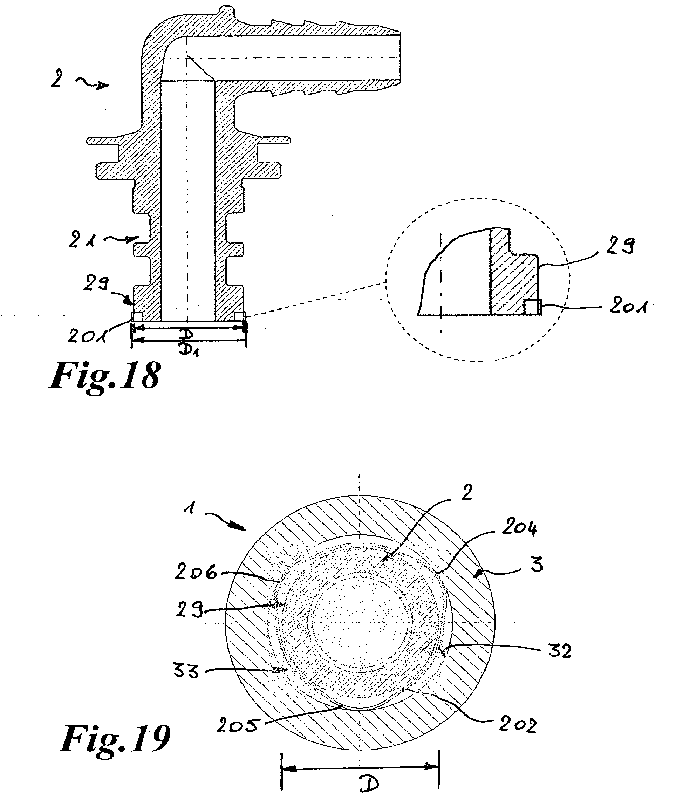

In Figur 18 ist eine alternative Ausführungsvariante des Kontaktelements 200 aus Figur 17 in Form des Kontaktelements 201 gezeigt. Dieses ist nicht konisch zulaufend ausgebildet. Vielmehr erstreckt es sich vollständig oder teilweise mit einem über seine Höhe zumindest im Wesentlichen gleichmäßigen Außendurchmesser D₁ um den äußeren Umfang bzw. Außendurchmesser D des distalen Endes 29 des Steckerschaftabschnitts 21 des Steckerteils 2 herum. Insbesondere kann es ähnlich wie die Ausführungsvariante des Kontaktelements 202 nach Figur 19 ausgebildet sein, also über den äußeren Umfang des distalen Endes 29 des Steckerschaftabschnitts 21 des Steckerteils 2 vorkragende Abschnitte aufweisen, z.B. vier solcher vorkragender Abschnitte. Auch über dieses Kontaktelement 201 ist ein Kontakt zwischen Steckerteil 2 und Kupplungsteil 3, in dem in den Kupplungsteil 3 eingesteckten Zustand möglich, zum Ableiten elektrischer Aufladungen über den Steckverbinder 1, auch ohne Vorsehen von zumindest teilweise elektrisch leitfähigem Scheibenelement 5 bzw. zumindest teilweise elektrisch leitfähigem Halteelement 4.

In Figur 19 ist eine Querschnittsansicht einer weiteren Ausführungsvariante des Steckverbinders 1 im Bereich von gestecktem Steckerteil 2 und Kupplungsteil 3 gezeigt. Auch hier ist außenseitig an dem Steckerteil 2 das Kontaktelement 202 in Form des in drei Abschnitten 204, 205 und 206 über den Außendurchmesser D des distalen Endes 29 des Steckerschaftabschnitts 21 auskragenden Kontaktelements 202 gezeigt. Mit seinen drei auskragenden Abschnitten 204, 205, 206 stützt sich das Kontaktelement 202 jeweils auf der Innenseite 32 der inneren Durchgangsöffnung 33 des Kupplungsteils 3 ab. Wie ebenfalls Figur 19 entnommen werden kann, ist das Kontaktelement 202 außenseitig an dem distalen Ende 29 des Steckerschaftabschnitts 21 des Steckerteils 2 angeformt. Ferner kann der Querschnittsansicht in Figur 19 entnommen werden, dass das Kontaktelement 202 insbesondere in den auskragenden Abschnitten 204, 205 und 206 nachgiebig bzw. elastisch ausgebildet sein kann, um sich optimal an der Innenseite 32 der inneren Durchgangsöffnung 33 des Kupplungsteils 3 abzustützen. In dem Bereich, in dem sich die auskragenden Abschnitte 204, 205 und 206 auf der Innenseite 32 der inneren Durchgangsöffnung 33 des Kupplungsteils 3 abstützen, ist eine elektrisch leitfähige Verbindung zwischen Steckerteil 2 und Kupplungsteil 3 möglich. Dementsprechend kann über den Steckverbinder 1 mit gestecktem Steckerteil 2 und Kupplungsteil 3 durch das Kontaktelement 202 wiederum ein Ableiten elektrischer Aufladungen über den Steckverbinder 1 erfolgen.Diesist somit auch ohne Vorsehen zumindest eines zumindest teilweise elektrisch leitfähigen Scheibenelements 5 bzw. zumindest eines zumindest teilweise elektrisch leitfähigen Halteelements 4 möglich. Grundsätzlich kann selbstverständlich auch zusätzlich zu zumindest einem zumindest teilweise elektrisch leitfähigen Scheibenelement 5 bzw. zumindest einem zumindest teilweise elektrisch leitfähigen Halteelement 4 ein solches Kontaktelement 200 bzw. 201 bzw. 202 vorgesehen werden.

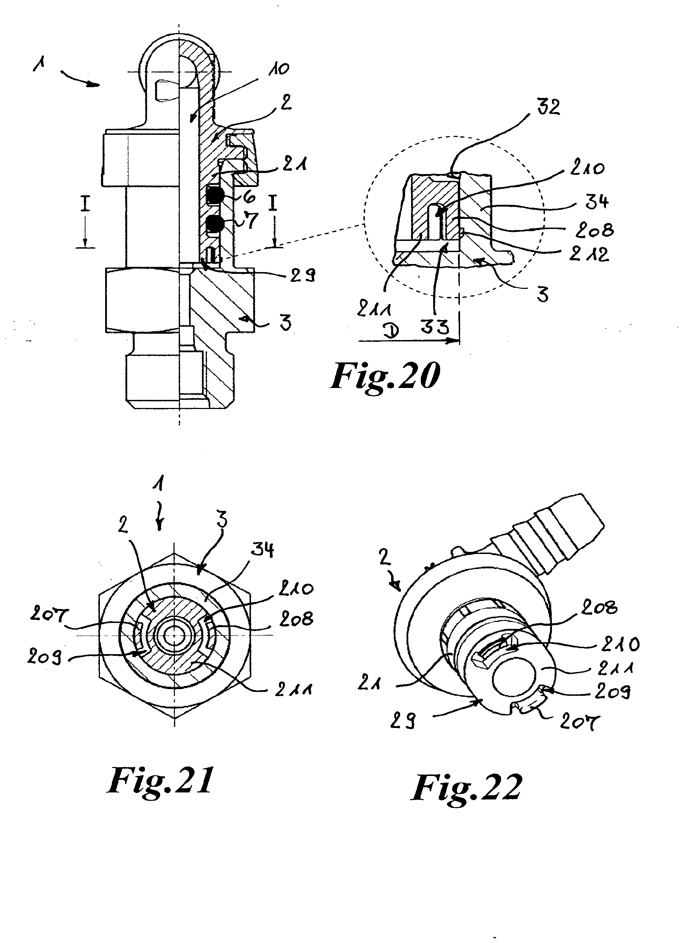

In den Figuren 20 bis 22 ist eine weitere nicht erfindungsgemäße Ausführungsform des Steckverbinders 1 gezeigt. Dieser weist als zwei einander gegenüberliegende Kontaktarme ausgebildete Kontaktelemente 207, 208 auf. Im Unterschied zu den Ausführungsvarianten der Kontaktelemente 200, 201 und 202 weisen die beiden als Kontaktarme ausgebildeten Kontaktelemente 207, 208 die Form von Ringsegmenten auf, die durch eine jeweilige Nut 209, 210 vom umgebenden Material des Körpers 211 des Steckerschaftabschnitts 21 abgegrenzt sind. Dies kann besonders gut den Figuren 21 und 22 entnommen werden. In der zusätzlichen vergrößerten Detailansicht des Bereichs des Steckerschaftabschnitts 21 mit dem Kontaktelement 208 in Figur 20 ist ferner erkennbar, dass die Kontaktelemente 207, 208 jeweils eine endseitig vorkragende Kontaktnase 212 aufweisen, die ebenso wie das Kontaktelement 200 gemäß Figur 17 und das Kontaktelement 201 gemäß Figur 18, über den Außendurchmesser D im Bereich des distalen Endes 29 des Steckerschaftabschnitts 21 hinausragen. Die vorkragenden Kontaktnasen 212 der beiden Kontaktelemente 207, 208 dienen, ebenso wie beispielsweise der Abschnitt 203 des Kontaktelements 200 gemäß Figur 17, dem Sicherstellen eines engen Anliegens der Kontaktelemente 207, 208 zumindest im Bereich der Kontaktnasen 212 auf der Innenseite 32 der inneren Durchgangsöffnung 33 eines Aufnahmeschafts 34 des Kupplungsteils 3 zum Aufnehmen des Steckerschaftabschnitts 21 und somit dem Sicherstellen einer guten elektrisch leitfähigen Verbindung zwischen Steckerteil 2 und Kupplungsteil 3 zum Ermöglichen eines Ableitens von elektrostatischen Aufladungen über die Kontaktelemente 207, 208 und dementsprechend über den Steckverbinder 1 aus Steckerteil 2 und Kupplungsteil 3. Der Steckverbinder 1 aus Steckerteil 2 und Kupplungsteil 3 besteht vorteilhaft aus einem entsprechend elektrisch leitfähigen Material, um das gewünschte Ableiten von elektrostatischen Aufladungen über den Steckverbinder 1 zu ermöglichen.

Neben den im Vorstehenden beschriebenen und in den Figuren gezeigten Ausführungsvarianten von Steckverbindern mit zumindest einem zumindest teilweise elektrisch leitfähigen Steckerteil, zumindest einem zumindest teilweise elektrisch leitfähigem Kupplungsteil sowie zumindest einem Steckerteil und Kupplungsteil aneinander fixierenden Halteelement können noch zahlreiche weitere gebildet werden, bei denen jeweils zwischen dem Steckerteil und dem Kupplungsteil ein zumindest teilweise elektrisch leitfähiges Scheibenelement angeordnet ist, das zum Ableiten einer elektrostatischen Aufladung über das Scheibenelement hinweg, somit durch den Steckverbinder hindurch, vorgesehen wird. Hierüber ist somit ein Stromabfluss über das Scheibenelement hinweg möglich, da dieses zumindest teilweise elektrisch leitfähig ist und fest und flächig an der Oberfläche des Steckerteils in einem Bereich, in dem dieses elektrisch leitfähig ausgebildet ist, und des Kupplungsteils, in dem dieser zumindest elektrisch leitfähig ausgebildet ist, anliegt.

### Bezugszeichenliste

- 1: Steckverbinder
- 2: Steckerteil
- 3: Kupplungsteil
- 4: Halteelement
- 5: zumindest teilweise elektrisch leitfähiges Scheibenelement
- 6: O-Ring
- 7: O-Ring
- 10: innere Durchgangsöffnung
- 20: Anschlussabschnitt/Dornabschnitt
- 21: Steckerschaftabschnitt
- 22: erster auskragender Kragenabschnitt
- 23: gewinkelter Übergangsabschnitt
- 24: zweiter auskragender Kragenabschnitt
- 25: Nut
- 26: Nut
- 27: Nut
- 28: Nut
- 29: distales Ende
- 30: auskragender Flanschabschnitt
- 31: Stirnseite von 30
- 32: Innenseite
- 33: innere Durchgangsöffnung
- 34: Aufnahmeschaft
- 40: umlaufender Spalt
- 41: Innenseite von 4
- 42: vorkragender Abschnitt
- 43: vorkragender Abschnitt
- 44: Abschnitt
- 45: Rastarm
- 46: Rastnocken
- 50 ...: innere Durchgangsöffnung
- 51: Außenseite
- 52: Außenseite
- 53: Segment aus elektrisch leitfähigem Material
- 54: Segment aus Polyamid
- 55: erste Lage aus leitfähigem Material, z.B. Kunststoffmaterial
- 56: zweite Lage aus elektrischem und/oder komprimierbarem Material, z.B. Schaummaterial
- 200: Kontaktelement
- 201: Kontaktelement
- 202: Kontaktelement
- 203: Abschnitt von 200
- 204: Abschnitt von 202
- 205: Abschnitt von 202
- 206: Abschnitt von 202
- 207: Kontaktelement/Kontaktarm
- 208: Kontaktelement/Kontaktarm
- 209: Nut
- 210: Nut
- 211: Körper von 21
- 212: Kontaktnase
- 240: Außenfläche
- h: Höhe von 5
- S: Spalt
- Aₐ: Außendurchmesser von 5
- Aᵢ: Innendurchmesser von 5
- B: Außendurchmesser von 24
- D: Außendurchmesser von 29
- D₁: Außendurchmesser von 201

## Patentansprüche

1. Steckverbinder (1), umfassend zumindest einen zumindest teilweise elektrisch leitfähigen Steckerteil (2), zumindest einen zumindest teilweise elektrisch leitfähigen Kupplungsteil (3) sowie zumindest ein Steckerteil (2) und Kupplungsteil (3) aneinander fixierendes Halteelement (4), wobei der Steckerteil (2) einen Steckerschaftabschnitt (21) aufweist, der dem Verbinden mit dem Kupplungsteil (3) dient und einen auskragenden Kragenabschnitt (24) aufweist,
**dadurch gekennzeichnet, dass**
zwischen dem zumindest einen Steckerteil (2) und dem zumindest einen Kupplungsteil (3) zumindest ein zumindest teilweise elektrisch leitfähiges Scheibenelement (5) angeordnet ist, wobei der Kupplungsteil (3) endseitig, als Gegenkontur zu dem auskragenden Kragenabschnitt (24) des Steckerteils (2), einen auskragenden Flanschabschnitt (30) aufweist und zwischen einer Stirnseite (31) des auskragenden Flanschabschnitts (30) und einer in Richtung des auskragenden Flanschabschnitts (30) gerichteten Außenfläche (240) des auskragenden Kragenabschnitts (24) des Steckerteils (2) das zumindest eine Scheibenelement (5) aufgenommen ist und Steckerteil und Kupplungsteil durch das zumindest eine Halteelement (4) aufeinander gepresst werden, wodurch die Außenfläche (240) des auskragenden Kragenabschnitts (24) des Steckerteils (2) sowie die Stirnseite (31) des auskragenden Flanschabschnitts (30) des Kupplungsteils (3) gegen das Scheibenelement (5) gepresst werden, somit das Scheibenelement (5) zwischen Steckerteil (2) und Kupplungsteil (3) eingeklemmt ist, wobei das zumindest teilweise elektrisch leitfähige Scheibenelement (5) eine Komprimierbarkeit auf 20 bis 40 % aufweist.

2. Steckverbinder (1) nach Anspruch 1,
**dadurch gekennzeichnet, dass**
das zumindest teilweise elektrisch leitfähige Scheibenelement (5) aus einem elastischen und/oder komprimierbaren elektrisch leitfähigen oder leitenden Material besteht oder dieses in zumindest einem elektrisch leitfähigen Bereich aufweist.

3. Steckverbinder (1) nach Anspruch 2,
**dadurch gekennzeichnet, dass**
das zumindest teilweise elektrisch leitfähige Scheibenelement (5) aus einer Kombination aus zumindest einem starren Material und zumindest einem elastischen und/oder komprimierbaren Material besteht.

4. Steckverbinder (1) nach einem der vorstehenden Ansprüche,
**dadurch gekennzeichnet, dass**
das zumindest teilweise elektrisch leitfähige Scheibenelement (5) eine 10 bis 40 % größere Höhe (h) als dem Abstand (S) zwischen der Stirnseite (31) des auskragenden Flanschabschnitts (30) des Kupplungsteils (3) und der Außenfläche (240) des auskragenden Kragenabschnitts (24) des Steckerteils (2) gesteckten Zustand entspräche, aufweist, also das zumindest teilweise elektrisch leitfähige Scheibenelement (5) 10 bis 40% dicker ausgebildet ist als der Abstand (S) zwischen der Stirnseite (31) des auskragenden Flanschabschnitts (30) des Kupplungsteils (3) und der Außenfläche (240) des auskragenden Kragenabschnitts (24) des Steckerteils (2) im gesteckten Zustand beträgt.

5. Steckverbinder (1) nach Anspruch 4,
**dadurch gekennzeichnet, dass**
das zumindest teilweise elektrisch leitfähige Scheibenelement (5) eine Höhe (h) von 0,1 mm im komprimierten Zustand bis 1,0 mm im nicht komprimierten Zustand, insbesondere 0,2 mm im komprimierten Zustand bis 0,8 mm im nicht komprimierten Zustand, insbesondere im nicht komprimierten Zustand eine Höhe (h) von zumindest 0,6 mm und im komprimierten Zustand eine Höhe (h) von kleiner gleich 0,4 mm aufweist.

6. Steckverbinder (1) nach einem der vorstehenden Ansprüche,
**dadurch gekennzeichnet, dass**
das zumindest teilweise elektrisch leitfähige Scheibenelement (5) flach und/oder zumindest teilweise bauchig und/oder zumindest teilweise mit Erhebungen und/oder Nuten versehen ausgebildet ist, insbesondere im Querschnitt linsenkopfförmig ausgebildet ist.

7. Steckverbinder (1) nach einem der vorstehenden Ansprüche,
**dadurch gekennzeichnet, dass**
das zumindest teilweise elektrisch leitfähige Scheibenelement (5) an den zumindest einen Steckerteil (2) angeformt, insbesondere als Zweikomponententeil an diesen angespritzt ist.

8. Steckverbinder (1) nach einem der vorstehenden Ansprüche,
**dadurch gekennzeichnet, dass**
das zumindest teilweise elektrisch leitfähige Scheibenelement (5) zumindest ein Schaummaterial aufweist, insbesondere aus zumindest einem geschlossenzelligen Schaummaterial besteht.

9. Steckverbinder (1) nach einem der vorstehenden Ansprüche,
**dadurch gekennzeichnet, dass**
der zumindest eine elektrisch leitfähige Bereich des zumindest teilweise elektrisch leitfähigen Scheibenelements (5) einen Widerstand von < 1 × 10⁴ Ωm aufweisen.

10. Steckverbinder (1) nach einem der vorstehenden Ansprüche,
**dadurch gekennzeichnet, dass**
das zumindest eine Halteelement (4) zumindest teilweise elektrisch leitfähig ausgebildet ist.

11. Steckverbinder nach Anspruch 10,
**dadurch gekennzeichnet, dass**
das zumindest eine zumindest teilweise elektrisch leitfähige Halteelement (4) aus dem gleichen Werkstoff besteht wie der zumindest eine zumindest teilweise elektrisch leitfähige Steckerteil (2), insbesondere aus PA66CF20.

## Claims

1. Plug-in connector (1), comprising at least one at least partially electrically conductive plug part (2), at least one at least partially electrically conductive coupling part (3), and at least one retaining element (4) which fixes the plug part (2) and the coupling part (3) together, wherein the plug part (2) has a plug shaft portion (21) which serves for connection to the coupling part (3) and has a protruding collar portion (24),
**characterised in that**
between the at least one plug part (2) and the at least one coupling part (3) there is arranged at least one at least partially electrically conductive disc element (5), wherein the coupling part (3) has at the end, as a mating contour to the protruding collar portion (24) of the plug part (2), a protruding flange portion (30), and the at least one disc element (5) is accommodated between an end face (31) of the protruding flange portion (30) and an outer surface (240),facing in the direction towards the protruding flange portion (30), of the protruding collar portion (24) of the plug part (2), and the plug part and the coupling part are pressed against one another by the at least one retaining element (4), whereby the outer surface (240) of the protruding collar portion (24) of the plug part (2) and the end face (31) of the protruding flange portion (30) of the coupling part (3) are pressed against the disc element (5) so that the disc element (5) is clamped between the plug part (2) and the coupling part (3), wherein the at least partially electrically conductive disc element (5) has a compressibility of from 20 to 40%.

2. Plug-in connector (1) according to claim 1,
**characterised in that**
the at least partially electrically conductive disc element (5) consists of a resilient and/or compressible electrically conductive or conducting material or has such a material in at least one electrically conductive region.

3. Plug-in connector (1) according to claim 2,
**characterised in that**
the at least partially electrically conductive disc element (5) consists of a combination of at least one rigid material and at least one resilient and/or compressible material.

4. Plug-in connector (1) according to any one of the preceding claims,
**characterised in that**
the at least partially electrically conductive disc element (5) has a height (h) that is from 10 to 40% greater than would correspond to the distance (S) between the end face (31) of the protruding flange portion (30) of the coupling part (3) and the outer surface (240) of the protruding collar portion (24) of the plug part (2) in the plugged-in state, that is to say the at least partially electrically conductive disc element (5) is configured so as to be from 10 to 40% thicker than the distance (S) between the end face (31) of the protruding flange portion (30) of the coupling part (3) and the outer surface (240) of the protruding collar portion (24) of the plug part (2) in the plugged-in state.

5. Plug-in connector (1) according to claim 4,
**characterised in that**
the at least partially electrically conductive disc element (5) has a height (h) of from 0.1 mm in the compressed state to 1.0 mm in the uncompressed state, in particular from 0.2 mm in the compressed state to 0.8 mm in the uncompressed state, in particular a height (h) of at least 0.6 mm in the uncompressed state and a height (h) of less than or equal to 0.4 mm in the compressed state.

6. Plug-in connector (1) according to any one of the preceding claims,
**characterised in that**
the at least partially electrically conductive disc element (5) is configured so as to be flat and/or at least partially bulbous and/or to be provided at least partially with elevations and/or grooves, in particular is configured so as to be button-head-shaped in cross section.

7. Plug-in connector (1) according to any one of the preceding claims,
**characterised in that**
the at least partially electrically conductive disc element (5) is moulded onto the at least one plug part (2), in particular is injection-moulded in the form of a twocomponent part onto the plug part.

8. Plug-in connector (1) according to any one of the preceding claims,
**characterised in that**
the at least partially electrically conductive disc element (5) has at least one foam material, in particular consists of at least one closed-cell foam material.

9. Plug-in connector (1) according to any one of the preceding claims,
**characterised in that**
the at least one electrically conductive region of the at least partially electrically conductive disc element (5) has a resistance of < 1 × 10⁴Ωm.

10. Plug-in connector (1) according to any one of the preceding claims,
**characterised in that**
the at least one retaining element (4) is configured so as to be at least partially electrically conductive.

11. Plug-in connector according to claim 10,
**characterised in that**
the at least one at least partially electrically conductive retaining element (4) consists of the same material as the at least one at least partially electrically conductive plug part (2), in particular of PA66CF20.

## Revendications

1. Connecteur à fiche (1) comprenant au moins une partie de fiche (2) au moins partiellement électroconductrice, au moins une partie de couplage (3) au moins partiellement électroconductrice ainsi qu'au moins un élément de retenue (4) fixant l'une à l'autre la partie de fiche (2) et la partie de couplage (3), dans lequel la partie de fiche (2) présente une section de tige de fiche (21) qui sert à la liaison avec la partie de couplage (3) et présente une section de collet (24) en saillie,
**caractérisé en ce que**
au moins un élément de disque (5) au moins partiellement électroconducteur est agencé entre l'au moins une partie de fiche (2) et l'au moins une partie de couplage (3), dans lequel la partie de couplage (3) présente côté extrémité, comme contour antagoniste à la section de collet (24) en saillie de la partie de fiche (2), une section de bride (30) en saillie et l'au moins un élément de disque (5) est reçu entre un côté frontal (31) de la section de bride (30) en saillie et une surface extérieure (240) de la section de collet (24) en saillie dirigée en direction de la section de bride (30) en saillie et la partie de fiche et la partie de couplage sont pressées l'une sur l'autre par l'au moins un élément de retenue (4), par quoi la surface extérieure (240) de la section de collet (24) en saillie de la partie de fiche (2) ainsi que le côté frontal (31) de la section de bride (30) en saillie de la partie de couplage (3) sont pressés contre l'élément de disque (5), ainsi l'élément de disque (5) est serré entre la partie de fiche (2) et la partie de couplage (3), dans lequel l'élément de disque (5) au moins partiellement électroconducteur présente une comprimabilité de 20 à 40 %.

2. Connecteur à fiche (1) selon la revendication 1,
**caractérisé en ce que**
l'élément de disque (5) au moins partiellement électroconducteur se compose d'un matériau élastique et/ou comprimable électroconducteur ou conducteur ou présente celui-ci dans au moins une zone électroconductrice.

3. Connecteur à fiche (1) selon la revendication 2,
**caractérisé en ce que**
l'élément de disque (5) au moins partiellement électroconducteur se compose d'une combinaison d'au moins un matériau rigide et d'au moins un matériau élastique et/ou comprimable.

4. Connecteur à fiche (1) selon l'une quelconque des revendications précédentes,
**caractérisé en ce que**
l'élément de disque (5) au moins partiellement électroconducteur présente une hauteur (h) supérieure de 10 à 40 % comme si elle correspondait à la distance (S) entre le côté frontal (31) de la section de bride (30) en saillie de la partie de couplage (3) et la surface extérieure (240) de la section de collet (24) en saillie de la partie de fiche (2) dans l'état enfiché, donc l'élément de disque (5) au moins partiellement électroconducteur est réalisé 10 à 40 % plus épais que la distance (S) entre le côté frontal (31) de la section de bride (30) en saillie de la partie de couplage (3) et la surface extérieure (240) de la section de collet (24) en saillie de la partie de fiche (2) dans l'état enfiché.

5. Connecteur à fiche (1) selon la revendication 4,
**caractérisé en ce que**
l'élément de disque (5) au moins partiellement électroconducteur présente une hauteur (h) de 0,1 mm dans l'état comprimé à 1,0 mm dans l'état non comprimé, en particulier de 0,2 mm dans l'état comprimé à 0,8 mm dans l'état non comprimé, en particulier dans l'état non comprimé une hauteur (h) d'au moins 0,6 mm et dans l'état comprimé une hauteur (h) inférieure ou égale à 0,4 mm.

6. Connecteur à fiche (1) selon l'une quelconque des revendications précédentes,
**caractérisé en ce que**
l'élément de disque (5) au moins partiellement électroconducteur est réalisé plat et/ou au moins partiellement bombé et/ou au moins partiellement pourvu d'élévations et/ou de rainures, en particulier est réalisé en section transversale en forme de tête de lentille.

7. Connecteur à fiche (1) selon l'une quelconque des revendications précédentes,
**caractérisé en ce que**
l'élément de disque (5) au moins partiellement électroconducteur est formé sur l'au moins une partie de fiche (2), en particulier est moulé par injection en particulier comme partie à deux composants sur celle-ci.

8. Connecteur à fiche (1) selon l'une quelconque des revendications précédentes,
**caractérisé en ce que**
l'élément de disque (5) au moins partiellement électroconducteur présente au moins un matériau expansé, en particulier se compose d'au moins un matériau expansé à alvéoles fermées.

9. Connecteur à fiche (1) selon l'une quelconque des revendications précédentes,
**caractérisé en ce que**
l'au moins une zone électroconductrice de l'élément de disque (5) au moins partiellement électroconducteur présente une résistance < 1 × 10⁴ Ωm.

10. Connecteur à fiche (1) selon l'une quelconque des revendications précédentes,
**caractérisé en ce que**
l'au moins un élément de retenue (4) est réalisé de manière au moins partiellement électroconductrice.

11. Connecteur à fiche selon la revendication 10,
**caractérisé en ce que**
l'au moins un élément de retenue (4) au moins partiellement électroconducteur se compose du même matériau que l'au moins une partie de fiche (2) au moins partiellement électroconductrice, en particulier de PA66CF20.
